# EUROPEAN PATENT APPLICATION

(11) **EP 4 787 092 A1**
(43) Date of publication of application: **05.08.2026**
(21) Application number: 25154858.2
(22) Date of filing: 30.01.2025
(51) Int. Cl.: G05B 19/404

(54) **THERMAL DISPLACEMENT COMPENSATION FOR EDM MACHINE**

(71) Applicant: Agie Charmilles SA, 6616 Losone (CH)
(72) Inventor: Monti, Filippo, 28801 Cossogno (IT); Bonini, Stefano, 6614 Brissago (CH)
(74) Representative: Arend, Christa

(57) **Abstract**

The invention provides a method for correcting a thermal displacement of a tool center point (TCP) with respect to a table of a machine tool by means of the machine tool axes whereas the positional deviations are determined using a regression model. The regression model is determined in the frame of preliminary thermo-elastic characterization experiments. The input variables used by the predefined regression model include: the measured axis position, a temperature of one or more machine parts, a measured ambient temperature, and the derivative of at least one of the ambient temperature and the temperature of a machine part.

## Description

### Field of the Invention

The invention relates generally to estimating the positional displacements caused by temperature variations and correcting the positional displacements by controlling the machine tool axes to the corrected positions.

### Background of the Invention

Temperature variations are an important cause of positioning inaccuracies in machine tools. Ambient temperature fluctuation should not exceed a few °C/day and fraction of °C/hour to limit thermal distortion attributable to the ambient when high accuracy is expected, but these conditions are not always met at the place of installation. As temperature changes, the components of the machine expand or contract, leading to dimensional variations. But the machine structure may also be distorted because of asymmetries and because the elongations are not always uniform. Temperature changes cause errors in positioning and part size which affects negatively the part quality. To mitigate the effect of ambient temperature variations the machine tool is sometimes encapsulated or installed in a temperature-controlled environment. Moreover, machine internal components such as motors, pumps, electrical cabinet, the process heat itself, etc. introduce heating at certain locations of the machine and often staggered in time. The machine tool should be designed according to the good rules of technique, means applying symmetrical design and short force/elongation path, reducing internal heat dissipation as much as possible, collecting dissipated heat at the origin and avoiding heat accumulation e.g. by conveying the heat away from the heat generating parts or stabilizing structural machine parts, protecting the structural machine components from the heat radiation and transmission, e.g. by deflectors and insulation, and controlling the temperature inside of a machine envelope, e.g. by controlling temperature of circulating machining fluid, temperature of circulating air, sprinkling the structural parts of the machine with temperature controlled machining fluid.

Moreover, machine accuracy can be improved by determining and compensating the positional displacements caused by temperature change, which in the following are also defined as thermal displacements. More specifically, the thermal displacement refers to the relative displacement of the tool center point and a working point on a table, caused by the change in dimensions of materials due to thermal expansion or contraction as temperature changes. The positional displacement of each axis direction can be compensated by means of the axis positioning system itself.

It is known to correct the thermal displacements by means of the axis positioning system, by measuring the ambient temperature, the temperature of machine components and/or a quantity reflecting the operational state of the machine and the regime, i.e. the heat generated by machine components and process itself, and thereby estimating the positional displacement.

Here the temperatures are measured and used to infer the elongation of the components. However, since the machine tool is constituted by several structural parts mounted chiefly in series and each component has a particular shape and thermal inertia it is very difficult to determine a relationship function between the temperature change and the positional displacement in a precise manner.

The invention aims to provide a simple method for estimating the positional displacement caused by temperature variations with a good estimation accuracy. The positional displacement of a tool center point with respect to the machine table is corrected by means of the machine tool axes.

### Summary of the Invention

The present invention is directed to the estimation of the thermal displacement of a tool center point (TCP) with respect to the machine table caused by temperature variations and the correction of said estimated positional displacement by means of the machine tool axes.

According to the present invention, this objective is achieved through the features of independent claims. In addition, further advantageous embodiments follow from the dependent claims and the description.

According to the present invention, the positional displacement of a tool center point (TCP) due to a temperature variation is corrected with respect to the machine table of a machine tool by measuring and correcting a position of at least one machine tool axis. The position of at least one machine tool axis is corrected by means of the output values of a predefined regression model which uses a plurality of input variables determined in operation. The input variables collected in operation comprise the measured axis position, a temperature of one or more machine parts, an ambient temperature measured outside of the machine envelope, and the discrete derivative of at least one of the ambient temperature and the temperature of the machine part.

According to the present invention, the predefined regression model is determined in the frame of preliminary experiments which serve for the thermo-elastic characterization of the machine. These experiments include: installing the machine in a temperature-controlled climate room, thermally stabilizing the machine by setting the climate room temperature at reference temperature for a sufficient time, e.g. 20°C +/-0.5°C, applying at least one ambient temperature profile representing a predefined temperature variation in time, and/or applying at least one machine usage regime profile in time, and, for at least one axis position, measuring the temperature of ambient and the temperature of one or more machine part e.g. Base, column, quill, ballscrew-nut and measuring the axis position, and measuring the positional displacements in the course of the experiment. Moreover, the derivative of at least one of the ambient temperature and the temperature of a machine part is determined. The measured values or filtered values are used as input values to a multivariate regression analysis, to determine the parameters of the multivariate regression model.

Further aspects are set forth in the dependent claims, the following description and the drawings. Other features are inherent in the methods and products disclosed or will become apparent to those skilled in the art from the following detailed description of embodiments and its accompanying drawings.

### Detailed description with reference to the drawings

The scope of the invention is to correct the thermal displacement of a tool center point with respect to the machine table. The considered temperature variations include variations of the ambient temperature and the machine internal temperature variations of at least one machine part. Temperature variations are determined by periodical or continuous temperature measurement in time, by means of appropriate temperature sensors. The positional displacement of at least one axis is corrected in consideration of temperature variations and in consideration of the actual axis position. The correction values are applied in real-time according to the position control loop cycle time. The correction values are determined by means of a predefined regression model which, in operation, is fed with the periodically measured input variables. The input variables measured in operation include the measured axis position (in millimeters), the temperature of one or more machine parts, the measured ambient temperature, and the discrete derivative of at least one of the ambient temperature and the temperature of a machine part. The input variables are measured periodically, e.g. every 1s.

The above-mentioned predefined regression model is determined in the frame of preliminary experiments as illustrated later hereunder.

The invention and certain embodiments thereof will now be described in more detail by way of example, and with reference to the accompanying drawings, illustrating the following:
- Fig. 1: a die-sinking machine;
- Fig. 2: a machine in a testing environment;
- Fig. 3a,b: exemplary temperature cycles;
- Fig. 4a,b: a measurement setup for the positional displacements;
- FIG. 5a,b: a 1D artifact of calibrated spheres, and a calibrated holes plate;
- FIG. 6: a flowchart of an experiment with regression analysis;
- FIG. 7: a flowchart of the application of the regression model for the correction of the positional displacement in operation;
- FIG. 8: an exemplary multivariate regression;
- Fig. 9: an exemplary graph of correcting a positional displacement, with and without temperature gradient as input value.

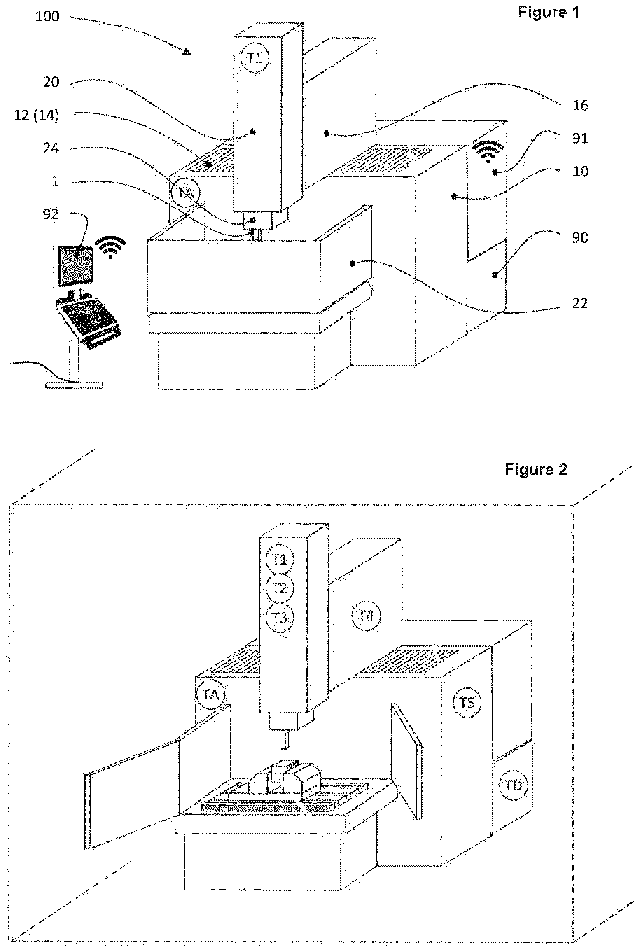

Figure 1 illustrates the main parts of an exemplary die-sinking EDM machine 100. A base 10 bears an X-slide 14 (saddle), which is arranged under the concertina bellows 12, the X-Slide 14 bears a Y-slide 16 (ram), and the Y-slide 16 bears the Z-axis 20 (quill/head). The quill 20 comprises a chuck 24 for the mounting of the electrode holder with an electrode 1. The machine 100 further comprises a dielectric unit 90 for the conditioning of the dielectric fluid, with its filtering and cooling circuit, an electrical cabinet 91, and a human-machine interface 92 which is connected with the machine, e.g. wirelessly. The workpiece is mounted on the table and the table is mounted on the stationary base 10. The working area is delimitated by the work tank 22. Moreover, the machine may comprise a C-axis mounted in series between the Z-axis 20 and the chuck 24. The illustrated exemplary die-sinking machine has a ball screw and nut transmission system and a linear glass scale for the axis position measurement and feedback (not shown) . The visible external surfaces of the machine constitute the machine envelope. Of course, the machine may be constituted in a different way, and a linear motor or direct drive may be used for the same scope in place of the traditional transmission system.

] The thermo-elastic characterization of the machine serves to determine the relationship of temperature variations and thermal displacements in time. Thermal displacements are relative positional displacements between the tool center point (or the component that holds the tool) and the table (or the component that holds the workpiece) because of thermal expansion of relevant structural elements. Experiments are made by executing well defined temperature cycles with or without load (i.e. machining), in a temperature-controlled environment, preferably in a climate room as illustrated in Figure 2. During the experiments the ambient temperature, the temperature of one or more machine parts, the axis position, and the positional displacements are measured. The measurements and derived values thereof are used as input values for the regression model.

In operation certain components of the machine are thermally stabilized by means of a continuous temperature-controlled fluid flow. In this way the heat generated in these components is evacuated and the thermal displacement can be substantially reduced. The components can be cooled using an airflow, or using the thermally controlled dielectric fluid, or a dedicated circuit with a cooling fluid.

For example, in a die-sinking machine a very sensitive part is the Z-axis which is the main working axis and typically corresponds to the extension direction of the cavity and thus executes frequent jump movement (flushing). In operation, the ball screw, the ball screw nut and/or Z-axis bearing can be stabilized by providing a temperature controlled dielectric fluid circuit. Moreover, depending on the kinematic design of the machine other structural parts are conveniently cooled. For instance, in a die-sinking machine with fixed table the Y-axis may be subject to considerable elongation because of its length and collocation.

The thermo-elastic characterization experiments are conducted by activating the thermal stabilization of the machine, in the same way as in normal machining operation. Preferably, the thermo-elastic characterization is made with the work tank at least partially filled with temperature-controlled dielectric fluid.

Temperature sensors used for the thermo-elastic characterization are mounted at the relevant parts of the examined machine. In the exemplary die-sinking machine as shown in Figure 2 the temperature sensors are located as follows and denoted as T1, T2, T3, T4, T5, TD, and TA: T1 is mounted at the bearing of Z-axis ball screw, T2 is mounted at the Z-slider (Z-casting), T3 is mounted at the ball screw nut, T4 is mounted at the Y-slider, and T5 is mounted at the machine base. In addition, the dielectric fluid temperature is measured by the temperature sensor TD. The ambient temperature in the climate room is measured by sensor TA at the outside of the machine envelope. The TA-sensor may be mounted at the machine envelope as shown in Figures 1 and 2, for instance.

In operation, the actual machine includes at least a plurality of sensors used for the thermo-elastic characterization, in particular an ambient temperature sensor by which the ambient temperature is measured at the exterior of the machine envelope, and at least one temperature sensor located at a machine component. For instance, as shown in Figure 1, the machine in operation includes an ambient sensor TA and the sensor T1 at the bearing of Z-axis ball screw.

The sensors must be immune to electromagnetic interferences, for instance the EM-radiations caused by the EDM machining process itself. The temperature sensor is e.g. a Pt100-type resistance temperature sensor, for instance temperature cable sensor with bolt-on sensor model TS2239 by IFM electronic GmbH, Essen, Germany.

The thermal displacements of the TCP with respect to the table/workpiece occurring during the thermo-elastic characterization are measured by means of a measurement system which is configured to measure the relative displacement of the TCP with respect to a measuring points on the machine table, with high accuracy.

The thermal displacements are measured with respect to the table of the machine tool, preferably at a plurality of measuring points of the machine tool; the position of the measuring points on the table is considered in the course of the thermo-elastic characterization together with the temperatures and the positional displacements. Specifically, according to the invention the positional displacements due to temperature variation are collected at the position of the measuring points on the table in the course of the thermo-elastic characterization. The position of the measuring points on the table is measured and controlled by means of the axis positioning system by measuring the axis position for each measuring points, e.g. by means of a glass scale. In this way the regression model is provided with the effective elongation length of the machine (elongation of machine structure in each axis direction due to temperature variation) between the TCP and different measuring points.

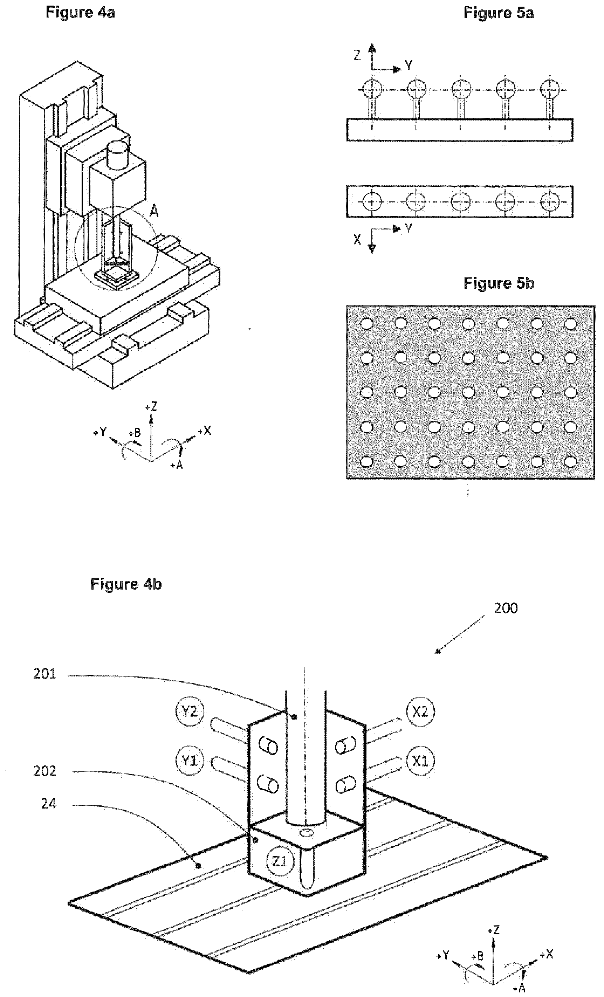

The measurement system is for instance a mechanical displacement transducer, an electronic displacement transducer, or optical displacement transducer. Figure 4a illustrates an exemplary displacement measurement configuration according to ISO 230/3, Test code for machine tools - Part 3: Determination of thermal effects. The ISO test code is to reveal the environmental temperature variation errors with the machine tool in the unloaded condition, but the same measurement setup can be used for the measurement of thermal displacements which are due to machine internal heat dissipation, i.e. load, which can be more detrimental to the thermal stability than ambient temperature changes.

A detail of the displacement measurement setup is shown in Figure 4b. A support fixture 202 for holding the displacement transducers is mounted on the machine table 24 which is parallel to the X-/Y-plane of the machine and the fixture is aligned e.g. with the machine X-axis movement, so that once mounted the displacement transducers are aligned with the X-, Y-, and Z- axes, and orthogonal to each other. A first pair of displacement transducers X1 and Y1 is mounted on the support fixture 202 at a height h1 from the table. Additionally, a second pair of displacement transducers X2 and Y2 is mounted at the support fixture 202 in Y- and X-direction, at a height h2, at a distance d from the first pair. Lastly, a 5^{th} displacement transducer Z1 is mounted at the base of the support fixture 202. A test mandrel 201, e.g. a precise cylindrical reference pin is mounted in the chuck (not shown. The longitudinal axis of the test mandrel is aligned with the Z-axis movement. The displacement transducers are positioned such as to touch or to be in the range of the test mandrel. In this way the translational and rotational (ΔX/ΔZ and ΔY/ΔZ) displacements of the test mandrel (at TCP) and displacement transducers (at the table) can be measured. Of course, the second pair of displacement transducers X2 and Y2 is not needed if only translational displacements are considered.

Preferably the displacement measurement setup is at least partially submerged by the dielectric fluid so that the support fixture and the transducers have a controlled temperature. The displacement transducers are e.g. Linear Variable Differential Transformers (LVDT) touch probes, for instance type T101F by Peter Hirt GmbH, Nänikon, Switzerland. But also non-contact probes can be used, e.g. laser-, infrared-, or ultrasonic sensors. Certain sensors are less suitable in electromagnetic environments such as capacitive sensors.

According to the invention the measurements are made at least at one axis position. Preferably, the positional displacements occurring in the thermo-elastic characterization experiment are measured at a plurality of axis positions of the X-, Y-axis, for instance at half-stroke and in proximity of the X- and Y-axis stroke limits, providing a 3x3 grid of observation points in the working area of the machine. In this way the impact of the axis position on the positional displacements due to temperature change is somehow considered.

The support fixture 202 illustrated in Figure 4b is positioned at half of the X- and Y-axis stroke, e.g. at X=250mm and at Y=175mm. To get all relative displacements (e.g. X=5/250/495mm, Y=5/175/345mm) the experiment must be executed at each position of the grid.

To save time, a plurality of similar support fixtures with displacement transducers can be mounted, e.g. in a row or in an array, to collect the relative displacements at different axis positions in one experiment. Here, each position of the grid has a support fixture with displacement transducers. In the course of each probing phase the test mandrel is brought in contact sequentially with the displacement transducers of each point of the grid to measure local relative displacements, to get all the displacements occurring in the course of the temperature cycle.

The measurements provide an information about the correlation of the relative positional displacements in time at the different axis positions, with a given temperature cycle. It goes without saying that the experiment can include different Z-axis positions and the number of points of the grid can be increased.

According to an embodiment the measurements at different axis positions are executed only with the most sensitive axes, that is the axes which are more subject to thermal expansion in case of temperature variation. For instance, the Y-axis of a C-frame machine having a resting table is such a case.

It is worth to mention that there are several solutions for the measurement of the positional displacement. Certain machine tools are equipped with measuring devices and functions, which under circumstances can replace the previously described external measuring equipment required for the thermo-elastic characterization of the machine. For instance, CNC controlled machines are sometimes equipped with a touch probing device, which is connected to the CNC. The machine is made to execute manual or programmed probing movements and the probe sends a trigger signal to the CNC during the probing. The probe can be used to periodically touch the reference features of an appropriate artifact, such as one or more single calibrated spheres, a 1D-row of spheres as shown in the Figure 5a or a 2D-array of calibrated spheres, or a plate having an array of calibrated holes as shown in the Figure 5b, for instance.

In the case of electrical discharge machines, the machine itself can act as a probing device, by using an electrode as an electrical touch probe, in known manner, and the artifact can be e.g. a workpiece having an array of reference holes for the electrical touch probing and the hole centres are determined using measuring cycles. Another method which can be used for the determination of the relative positional displacements due to temperature change is the Opto-mechanical position finder illustrated in EP2319655A1. A camera is attached to the machine head for capturing images of a workpiece surface, respectively the images of the characteristic fiducial pattern at each position of the surface. A part position finder processes the images captured by the camera and machine axis position data and establishes geometric relationships between various reference frames.

In other words, there are different ways to measure the positional displacement occurring in the characterization experiments, however the measurements system must be sufficiently accurate and repeatable. The accuracy of the entire displacement measurement setup should be in the order of 0.3µm or better.

Before starting the temperature cycle a temperature stability test is executed to check the stability of the measurement signals and validate the measuring setup. The measuring devices are monitored to ensure that the machine has stabilized.

First, the ambient temperature is maintained at a stable reference temperature, e.g. 20°C. The machine is powered up and set in standby mode, with axes in "Hold" position and dielectric circulation is activated for a period sufficient to stabilize the effects of internal heat sources, e.g. 6 hours and thereafter. In this way the machine including components having high thermal inertia, namely slow thermal response can be considered thermally stable. The machine is then operated at a defined machining regime or emulated to reflect a typical load situation.

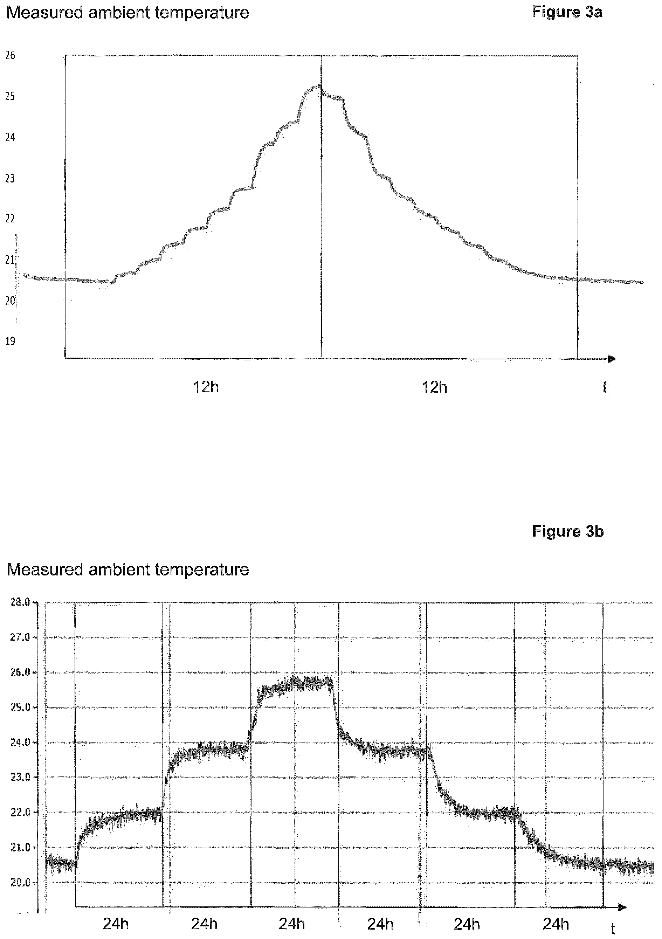

Figures 3a and 3b shows the ambient temperature measured during two exemplary temperature cycles. A first exemplary temperature cycle emulates the temperature change occurring over a day, with an excursion of 4.7°C. The cycle lasts 24 hours, starting at 20.5°C and includes a heating phase in which the climate room temperature is increased progressively and smoothly up to 25.2°C, followed by a cooling phase where the temperature is reduced to 20.5°C.

The second exemplary temperature cycle shown in Figure 3b lasts 6 times 24 hours and includes 3 consecutive heating phases in which the climate room temperature is increased stepwise by 1.7°C each time, from 20.6°C up to 25.7°C. Then it continues with 3 consecutive cooling phases of 24 hours each in which the climate room temperature is decreased stepwise by 1.7°C down to 20.6°C. This second temperature cycle is to determine the steady state positional displacements at different temperatures.

The charts 3a and 3b show the measured ambient temperature of the climate room, which is slightly different from the desired temperature, however this is irrelevant because the measured temperatures are considered for the model.

Preferably, the thermo-elastic characterization is conducted by reproducing the real working condition of the machine tool, by activation of the relevant heat dissipating elements which are present in a real machining. The program used in the characterization experiments is either a real machining program or a machining emulation program or a substantially static condition. Since machining is rather not compatible with the requirements for the measurement such asprocess debris, machining fluid, etc., the processing is sometimes emulated. For instance, in the case of an EDM machine a mayor heat source are the pumps of the dielectric unit, which must be activated, but also the dielectric circulation and cooling must reflect the real machining condition. Moreover, axis movements may be executed to emulate the heat dissipation caused by motor and/or transmission, in particular thefriction of the elements, same as in the real working condition. In particular, the heat generated in the Z-axis for the periodic flushing movements, the orbiting movements and servo movements are generally not negligible. For example, to emulate the real working condition during the thermo-elastic characterization, a "dynamic" test program includes machine axis movements, including orbiting movements and the execution of Z-axis flushing movements, namely the so-called jumps and activation of the pumps.

The heat produced by the erosion process in proximity of the submerged gap can also be considerable but its effect on the Z-axis elongation is less critical because the gap is submerged, and the machining fluid is thermally stabilized.

Still, this contribution to heat input can be emulated by an equivalent heat source, e.g. an electrical resistance heater in the work tank. The "dynamic" test program includes active periods of e.g. 5 minutes in which the axes are moved according to the program, and pause periods of e.g. 30 seconds in which the test mandrel 201 is moved to the measuring position, against the displacement transducers as show exemplarily in Figure 4b to measure the actual positions.

On the other hand, a "static" test program could be used to emulate a stand-by condition, in which the axes are substantially resting, and where the positional displacements are caused mainly by the change of the ambient temperature. The advantage of the "static" test program is clearly the fact that the positional positional displacement can be acquired continuously or at least with short sampling intervals because the test mandrel 201 is substantially resting with respect to the displacement transducers.

Preferably, different conditions are emulated to reflect several contributions and condition.

The machine is now ready for the thermo-elastic characterization experiments. The display of the displacement transducers is zeroed, and the temperature cycle is started. The program is started, for example, a "dynamic" machining emulation program. The test program is paused periodically to measure the relative displacement of the test mandrel at one or more axis positions. Simultaneously the temperature measurements at predefined positions of the machine are recorded, as show exemplarily in Figure 2.

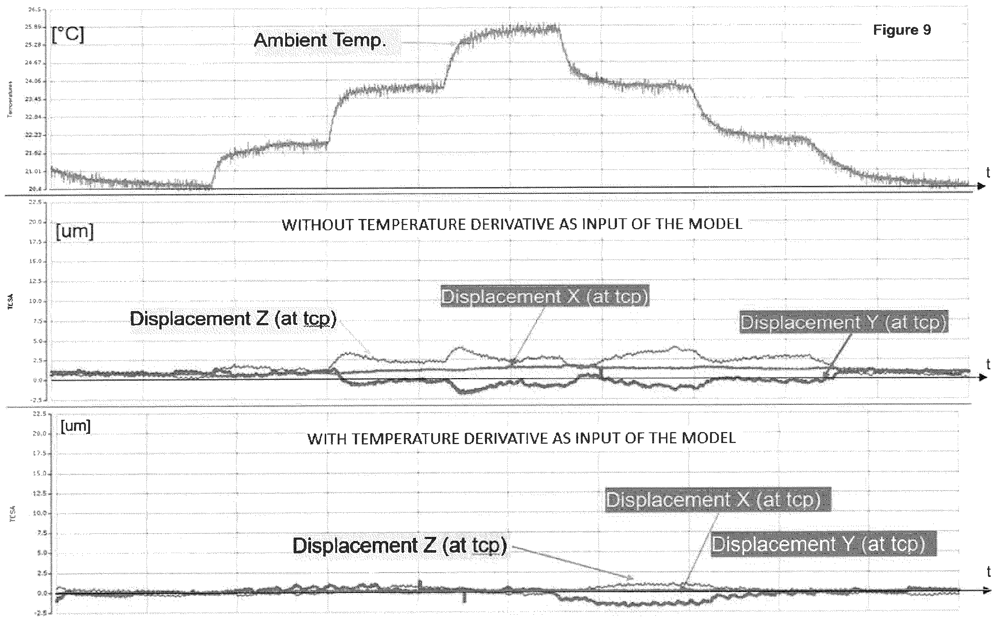

In the preliminary experiments the compensation of positional displacements was delayed in time. Indeed, some machine components have lower time constant and are thus more sensitive to temperature change. The experiments with the earlier regression model, in which the temperature change was not considered as input value, were trailing behind the actual elongation of the components. Thus, applying a derivative of the temperature for the sensitive parts provides an early indicator of the temperature variation. By adjusting the regression model to include the discrete derivative of the temperature the response delay is reduced, and the correction of thermal displacement is substantially improved. Moreover, the range of positional displacements during the temperature cycle is reduced. These results are illustrated by the graphs of Figure 9.

Here the term 'temperature derivative' denotes mainly the discrete temperature variation per time unit ΔT/Δt, where ΔT is the difference between two successive temperature samplings ΔT[i]= T[i]-T[i-N], and Δt is typically a fixed time between two temperature sampling instances. But thetemperature derivative may include also the mathematic derivative function of temperature change in time dT/dt, where the course of temperature over time is replaced by a temperature function, where the temperature function is determined e.g. by curve fitting based on the temperatures measured at discrete intervals e.g. for a part of the entire course of measurement. The discrete temperature derivative of a measured temperature serves as input value in the determination of the regression model parameters. In particular the discrete temperature derivative of a temperature measured in operation serves as input value for the determination of the positional displacements in the actual use of the machine.

For the determination of the model, a .csv matrix with all the acquisitions, i.e. the measured temperatures and positional displacements are imported in a Python environment. This operation is executed once for all considered translation axes.

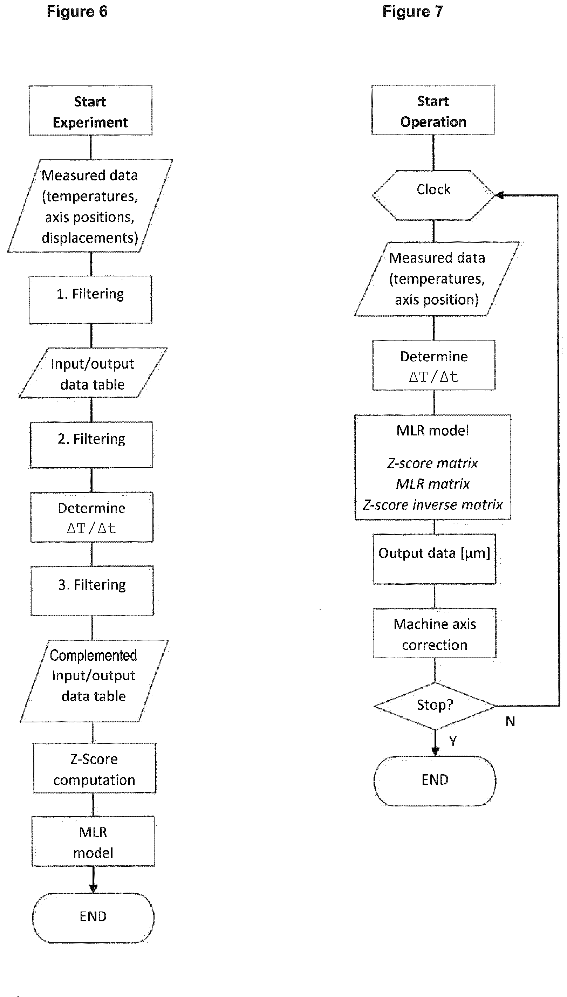

As illustrated in the flowchart of Figure 6 the measured data are initially filtered to remove the residual noise and this step is denoted as 1.filtering in the figure 6. Then, the data are split into inputs, i.e. the temperatures and the predetermined axis positions, and outputs, i.e. the displacements measured with LVDT touch probes. Next, the discrete derivatives of the temperatures are calculated as follows:
1. Filtering the temperature signal to remove unwanted noise using a IIR (infinite impulse response) or FIR (finite impulse response) digital filter, denoted as 2.filtering in the figure 6;
2. Applying the derivative function (discrete derivative, ΔT/Δt) to this signal, taking the difference ΔT[i] between the temperature sample T(i) and the same signal N samples back, T(i-N), resulting in ΔT[i]= T[i]-T[i-N];
3. The resulting derivative is filtered again by means of an IIR or FIR filter to reduce the noise generated during differentiation, denoted as 3.filtering in the figure 6;
4. The resulting signal is added as input to the complemented input/output data table for the MLR model.

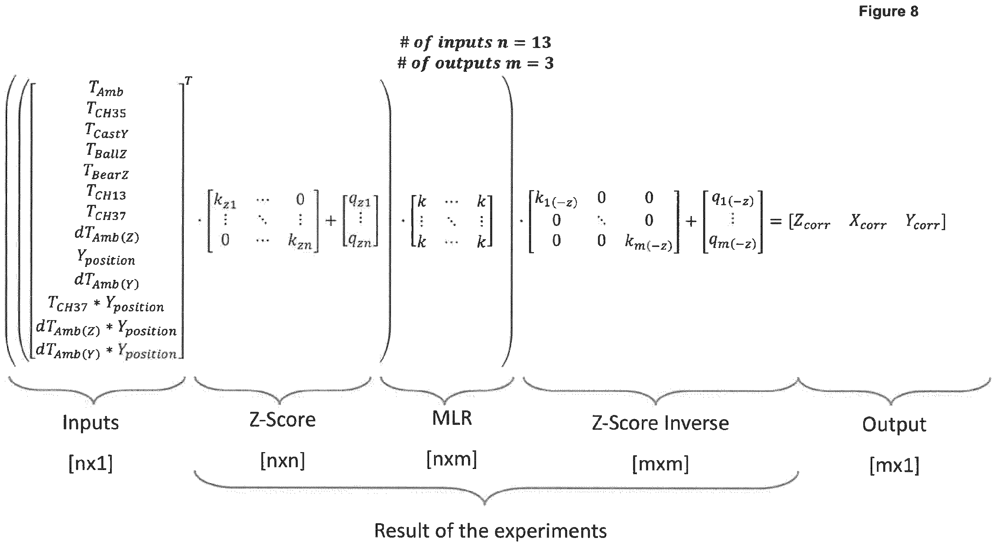

As shown in Figure 8, for each of the inputs and the outputs, the Z-Score is calculated to normalize the signals, that is: X_z = (X-mean(X))/devstd(X).

Based on these data, the multivariate linear regression is calculated for each machine axis displacement. A coefficient matrix with n x m parameters is obtained, with n: number of inputs and m: number of outputs.

Finally, to obtain the physical displacements, an inverse of the Z-score normalization is applied, that is: X_z*devstd(X) + mean(X).

From this process, as shown in Figure 8, five matrices are extracted, for the axes X-, Y- and Z:
1. The matrix containing the multiplicative part of the Z-score of the inputs (1/devstd(inputs)), i.e. the [nxn] matrix;
2. The matrix containing the offset part of the Z-score of the inputs (-mean(inputs)/devstd(inputs)), i.e. the [nx1] matrix;
3. The matrix containing the multiplicative parameters of the MLR model calculated before, i.e. the [nxm] matrix;
4. The matrix containing the multiplicative part of the inverse Z-score of the outputs (devstd(outputs)), i.e. the [mxm] matrix; and
5. The matrix containing the offset part of the inverse of the Z-score of the outputs (+mean(outputs)), i.e. the [mx1] matrix.

In operation the positional displacements caused by temperature variations are not measured anymore but are now computed continuously or periodically for each axis using the previously determined regression model and are used as correction values for the axis positions. The correction values are continuously applied via the axis position control loop. The input variables collected in operation include the temperature of one or more machine parts, a measured ambient temperature, the discrete derivative of the ambient temperature and/or the temperature of a machine part, and the measured axis positions. The axis positions are measured to correlate the elongation and the current axis position.

In operation the positional displacements are obtained as a function of the measured temperatures and measured axis positions using the determined Results of the experiments, namely the Z-score matrix, the MLR matrix, and the Z-score inverse matrix, as illustrated in more detail with reference to flowchart of Figure 7:
1. The pre-defined temperature inputs, for instance the ambient temperature and the temperature of Z-axis ball screw-nut are sampled at fixed sampling times and are used as an input values;
2. With the same sample time, the discrete derivatives of the temperature inputs are calculated for each acquisition, by means of the process previously described for the experimental phase, with the same parameters (sample time, filters, N) used during model definition;
3. The displacements from the inputs are determined:
   a. The inputs are multiplied with the matrix 1. (multiplicative part of Z-Score),
   b. Then added to matrix 2. (offset part of Z-Score),
   c. Then multiplied with the matrix 3. (MLR model),
   d. Then multiplied with the matrix 4. (multiplicative part of the inverse Z-Score),
   e. Then added to the matrix 5. (offset part of the inverse Z-Score);
4. With the same sample time, the positional displacements are computed based on the last set of sampled and computed inputs including temperatures, axis position, discrete temperature derivatives;
5. Lastly, the computer numerical control (CNC) adjusts the axis position of each individual axis according to the determined correction values, to compensate the positional displacement in real-time.

This sequence is repeated continuously, according to the defined sampling interval.

The correction of the positional displacements is implemented by means of the axis position control loop. While the axis position control loop of the machine is operated in real time, with e.g. 1 ms cycle time, the measurement of the temperatures in experiments and in operation and computation of thermal displacements in operation can occur less frequently, for instance every 1s, or more generally in a range of e.g. 0.1s-60s. For instance, positional displacements are computed every 1 second, and correction values are updated accordingly in the axis position control loop.

In a preferred embodiment, the correction method is applied to an Electrical Discharge Machine. The electrical discharge machining process has some particular characteristics: the process takes place in a dielectric fluid which fills the gap between the electrode and the workpiece. Typically, a work tank is filled with a dielectric fluid to ensure the presence of dielectric in the gap. The dielectric fluid acts as an insulator between the electrode and the workpiece, helps cool the electrodes and workpiece, while also flushing away debris produced from the machining process. The temperature of the dielectric is set at the desired temperature so that machining occurs under stable thermal conditions which is important to achieve the best accuracy.

Preferably, the dielectric is controlled in a manner that the dielectric temperature is kept to a fixed temperature by means of a heat exchanger. Here the dielectric temperature is set to a defined temperature, which is for example the mean temperature of the day. Alternatively, the dielectric is controlled in a manner that the dielectric temperature follows the temperature of the machine body and/or ambient. This variant is of interest where the ambient temperature variations are comparably small, e.g. less than +/- 0.5°C/h and less than +/-2.5°C/day.

Preferably, the Z-axis bearing is cooled by the dielectric to maintain a stable temperature. No dedicated heat exchanger, valves and control are required to cool the Z-axis bearing. This provides a positive effect because the Z-axis thermal behavior becomes more "linear" and predictable, but the negative effect is that a thermal error is introduced on Z-axis. However, this effect is fully compensated by the thermocompensation algorithm.

The inventive method is used mainly to determine the behavior of a series machine type having a well-defined axis configuration and size. Here the determined regression model is used for every machine of that type to correct positional displacements. It goes without saying that the method can be improved, e.g. by increasing the number of measurements in the experiment and or in operation, by determining the positional displacements at several heights in Z, by adopting known preventive measures such as the ones mentioned in the Background.

## Claims

1. A method for correcting a positional displacement of a tool center point (TCP) with respect to a table of a machine tool, in particular an electrical discharge machine tool, in which a position of at least one machine tool axis is measured and said position is corrected by means of the output values of a predefined regression model which uses a plurality of input variables determined in operation, wherein the input variables used by the predefined regression model comprises:
- the measured axis position;
- a temperature of one or more machine parts;
- a measured ambient temperature; and
- the discrete derivative of at least one of the ambient temperature and the temperature of the machine part.

2. The method according to claim 1, in which said predefined regression model is determined by applying the following steps:
- installing the machine in a temperature-controlled climate room;
- thermally stabilizing the machine by setting the climate room temperature at a reference temperature;
- applying at least one ambient temperature profile, representing a predefined temperature variation in time, and/or applying at least one machine usage regime profile in time;
- for at least one axis position, periodically measuring
o the temperature of ambient,
o the temperature of one or more machine parts,
o the axis position,
o the positional displacements,
- determining the derivative of at least one of the ambient temperature and the temperature of a machine part;
- executing a multivariate regression analysis using these measured values as input values; and
- determining the parameters of the multivariate regression model.

3. The method according to claim 2, **characterized in that** the predefined regression model is a Multivariate linear regression model.

4. The method according one of claims 1 to 3, wherein the positional displacements are measured at half of the X axis stroke and/ or at half of the Y axis stroke.

5. The method according to one of claims 1 to 4, wherein the positional displacements are measured at least at three machine axis positions.
